# EUROPÄISCHE PATENTSCHRIFT

(11) **EP 1 135 563 B1**
(45) Veröffentlichungstag und Bekanntmachung des Hinweises auf die Patenterteilung: **03.09.2003**
(21) Anmeldenummer: 99959380.9
(22) Anmeldetag: 06.12.1999
(51) Int. Cl.: E04B 2/76

(54) **HOHLPROFILSTAB**
HOLLOW PROFILE BAR
BARREAU PROFILE CREUX

(30) Priorität: 04.12.1998 DE 19855928
(43) Veröffentlichungstag der Anmeldung: 26.09.2001
(73) Patentinhaber: Rixen, Wolfgang, Dipl.-Ing., 42699 Solingen (DE); Pies, Gerrit, 42699 Solingen (DE)
(72) Erfinder: Rixen, Wolfgang, Dipl.-Ing., 42699 Solingen (DE); Pies, Gerrit, 42699 Solingen (DE)
(74) Vertreter: Draudt, Axel Hermann Christian, Dipl.-Ing.
(86) Internationale Anmeldenummer: EP9909511
(87) Internationale Veröffentlichungsnummer: WO00034597

(56) Entgegenhaltungen:
- GB-A- 2 064 055
- US-A- 3 875 721
- US-A- 4 583 359

## Beschreibung

Die Erfindung betrifft einen Hohlprofilstab, insbesondere aus extrudiertem Metall, mit einer kreiszylindrisch ausgebildeten Rohrwand (11), die gleichmäßig über den Außenumfang verteilte, radial vorstehende Außenstege (12) aufweist, die paarweise zwischen sich schwalbenschwanzförmige Mantelnuten (14) einschließen, deren Seitenwänden (13) einen überwiegend geradlinigen Verlauf aufweisen, wodurch diesen jeweils eine Neigungslinie (17, 17') zugeordnet werden kann, wobei ein überstehender Teil bzw. ein Vorstand (15) der Außenstege (12) von der Rohrwand (11) praktisch gleich deren Dicke (16) ist und sich die Neigungslinien (17, 17') der Seitenwände (13) eines Außenstegs zwischen diesem und der Stabachse (18) schneiden.

Aus US 3, 875, 721 ist ein derartiger Hohlprofilstab mit den vorgenannten Merkmalen bekannt. Die Außenstege sind an ihrem äußeren Umfang breiter als auf ihrem durch den Grund der Mantelnuten bestimmten Umfang, so daß sich eine entsprechende Hinterschneidung bildet. Das Ausmaß der Hinterschneidung ist dadurch bestimmt, daß sich die Neigungslinien der Außenstege etwa zwischen diesem und der Stabachse nicht schneiden. Da allerdings der Verbindungsbereich zwischen Außensteg und Rohrwand bei diesem bekannten Hohlprofilstab sehr scharfkantig ist, können in diesem Bereich große, sogar zerstörende Abspannungen auftreten, wenn die Außenstege belastet werden.

Außerdem ist es bei Hohlprofilstäben mit einer ringsum gleichdicken Rohrwand bekannt, stark hinterschnittene Außenstege auszubilden, beispielsweise durch die GB-A-1 557 693. Die Außenstege sind T-förmig bzw. haben einen ankerförmigen Querschnitt. Sie bilden einen polygonalen Außenumfang des Hohlprofilstabs. Dessen Mantelnuten sind großvolumig, so daß sich erhebliche Instabilitäten einstellen, wenn an den Außenstegen Verankerungen vorgenommen werden, mit denen also ein weiterer Hohlprofilstab kraft- oder formschlüssig mittels eines Verbinders angekoppelt werden soll.

Aus der US-A-3 969 031 sind Hohlprofilstäbe mit stark hinterschnittenen und kleinvolumigen Mantelnuten bekannt. Diese Mantelnuten bildenden Außenstege springen nur wenig vor, sind aber in Bezug auf die Mantelnuten sehr breit. Außerdem ist keine ringsum gleichdicke Rohrwand vorhanden. Die bekannte Rohrwand bildet vielmehr den Nutenboden und Nutenseitenwandabschnitte sowie Bereiche des Außenstegs. Der Innenumfang des Hohlprofilstabs ist dementsprechend gewellt und aus dieser Wellung ergeben sich bei größeren Belastungen durch anzuklemmende Hohlprofilestäbe entsprechende Instabilitäten der bekannten Rohrwand.

Der Erfindung liegt daher die Aufgabe zugrunde, einen Hohlprofilstab mit den eingangs genannten Merkmalen so zu verbessern, daß er trotz seiner ringsum gleichdicken und damit vorteilhafterweise dünnen Rohrwand stabile Klemmbefestigungen eines Hohlprofilstabs oder weiterer Hohlprofilstäbe stets sicher zuläßt, insbesondere wenn mehrere Hohlprofilstäbe in derselben Ankopplungsebene anzukoppeln sind und seine Biegestabilität erhöht ist.

Diese Aufgabe wird bei einem Hohlprofilstab der eingangs genannten Art erfindungsgemäß dadurch gelöst, daß die Seitenwände eines Außenstegs mit vorbestimmten Radien in den Außenumfang der Rohrwand und/oder in eine praktisch außenwandparallele oder dazu konvex gewölbte Sichtfläche des Außenstegs übergehen.

Für die Stabilität ist von Bedeutung, daß sich die Neigungslinien der Seitenwände eines Außenstegs, nämlich desselben Außenstegs, zwischen diesem und der Stabachse schneiden. Die Seitenwände sind dann wesentlich stärker geneigt, und die Hinterschneidungen sind entsprechend größer, als wenn die Neigungslinien durch die Stabachse verlaufen bzw. diese ohne vorherigen Schnittpunkt umfassen. Keinesfalls stehen die Neigungslinien senkrecht auf dem Außenumfang der Rohrwand, sondern schließen mit dieser einen spitzen Winkel ein. Die Spitzwinkeligkeit ermöglicht einen radial formschlüssigen Angriff eines Verbinders eines anzukoppelnden Hohlprofilstabs bereits an einer der beiden Seitenwände eines Außenstegs. Dabei ist von Bedeutung, daß die von den Außenstegen zur Verfügung gestellten Kopplungsstellen in der Nähe der Rohrwand liegen, so daß an den Außenstegen keine besonders großen Hebelarme auftreten, die zu Verformungen der Außenstege und/oder der Rohrwand führen können. Infolge der erheblichen Neigung der Seitenwände der Außenstege können Profilstäbe koppelnde Verbinder an nur wenigen Außenstegen angreifen, im Extremfall an einem einzigen. Infolgedessen nehmen diese Verbinder nur einen geringen Anteil des Außenumfangs der Rohrwand ein. Um in dem Verbindungsbereich zwischen Außensteg und Rohrwand durch Belastungen des Außenstegs auftretende Kerbspannungen zu reduzieren und um die Handhabung des Hohlprofilstabs beim Ankoppeln und im Gebrauch der fertigen Struktur nicht durch unerwünscht scharfe Kanten zu beeinträchtigen, wird der Hohlprofilstab so ausgebildet, daß die Seitenwände eines Außenstegs mit vorbestimmten Radien in den Außenumfang der Rohrwand und/oder in eine praktisch außenwandparallele oder dazu konvex gewölbte Sichtfläche des Aussenstegs übergehen. Weiterhin ist dabei von Bedeutung, daß an einer Innenwand einer ringsum gleichdicken Rohrwand mehr als zwei gleichmäßig über den Innenumfang verteilte radial vorspringende Innenstege ausgebildet sind. Derartige Innenstege können mehrere Funktionen übernehmen. Zum einen stabilisieren sie den Hohlprofilstab gegen Durchbiegung. Zum anderen ist es aber möglich, an ihnen Verbinder angreifen zu lassen, die in eine Stirnseite des Hohlprofilstabs eingreifen und die Innenstege zwischen sich klemmen können. Dabei müssen die Innenstege nur so weit vorspringen, wie zu ihrer sicheren Erfassung durch die Verbinder notwendig ist. Sie brauchen also nicht den gesamten Rohrinnenraum zu überbrücken, so daß dann quer durchlaufende Wände vorhanden wären.

Ferner ist der Hohlprofilstab dabei so ausgebildet, daß die Innenstege mit den hinterschnittenen Mantelnuten fluchten. In diesem Fall versteifen die Innenstege die Rohrwand in einem zwischen zwei Außenstegen gelegenen Bereich insbesondere gegen Eindrücken der Rohrwand. Das ist insbesondere von Vorteil, wenn die Verbinder über zwei Außenstege angreifen, die zwischen sich eine Mantelnut einschließen, so daß der Rohrwandbereich zwischen den Außenstegen besonders belastet ist.

Der Hohlprofilstab kann dahingehend weitergebildet werden, daß die Neigungslinien der Seitenwände eines Außenstegs einen in der Rohrwand liegenden Schnittpunkt haben. Eine solche Ausgestaltung ist insbesondere dann vorteilhaft, wenn die Breite der Außenstege auf Höhe des Außenumfangs der Rohrwand etwa gleich deren Dicke ist. Es ergibt sich eine wenig materialaufwendige aber dennoch ausreichend feste Struktur im Verbindungsbereich des Außenstegs und der Rohrwand.

Weiterhin kann es von Vorteil sein, wenn der geringste Abstand zweier Außenstege praktisch gleichgroß oder größer ist, als dessen Außenumfangslänge. Hierdurch ergeben sich große Nutenweiten, insbesondere im Nutmündungsbereich. Damit können in Rohrumfangsrichtung vergleichsweise breitbauende Verbinder angewendet werden. An den Verbindern sind dementsprechend stabile Querschnitte auszubilden.

Wenn es erforderlich ist, daß der Hohlprofilstab im Bereich des Angriffs von Verbindern für andere Hohlprofilstäbe besonders stabil sein soll, kann es vorteilhaft sein, den Hohlprofilstab so auszubilden, daß die Außenumfangslänge eines Außenstegs praktisch das Dreifache des geringsten Abstands zweier Außenstege ist. Es wird dann zwischen zwei Mantelnuten ein besonders massiver Rohrwandquerschnitt erreicht, der entsprechend stabil ist. Gleichwohl kann eine solche Querschnittsausgestaltung des Hohlprofilstabs in eine im übrigen abweichend ausgebildete Querschnittsgestaltung integriert werden.

Vorteilhafterweise wird der Hohlprofilstab so ausgebildet, daß die Teilung von Außenstegen an Rohrwänden kreiszylindrischen Querschnitts 22,5 oder 45 Winkelgrad beträgt. Hiermit ergibt sich bei einer üblichen Bemaßung der Querschnitte von Hohlprofilstäben im Bereich von einigen Zentimetern eine Außenumfangsgestaltung, die es gestattet mit Verbindern für anzuschließende Hohlprofilstäbe zu arbeiten, die übliche Querschnitte im Hinblick auf die Festigkeitsanforderungen aufweisen.

Der Hohlprofilstab kann so ausgebildet werden, daß die Innenstege eine gleiche oder eine doppelt so große Teilung aufweisen, wie die Mantelnuten. Ist die Teilung der Innenstege die gleiche wie die der Mantelnuten, so ergibt sich eine optimale Versteifung der Rohrwand über den gesamten Umfang, insbesondere wenn Innenstege mit den hinterschnittenen Mantelnuten fluchten. Eine doppelt so große Teilung der Innenstege ist dann angezeigt, wenn bei Hohlprofilstäben vergleichsweise kleinen Querschnitts möglichst massive Verbinder angewendet werden sollen, um innerhalb des Hohlprofilstabs Innenstege festzuklemmen.

Es ist möglich, den Hohlprofilstab so auszubilden, daß die Innenstege jeweils eine breite Basis und einen davon ausgehend radial erstreckten dünneren Klemmstreifen aufweisen. Die breite Basis und der daran ansetzende dünnere Klemmstreifen bilden eine Absetzung. Dabei ist die breite Basis stabiler als der Klemmstreifen und ermöglicht so eine sichere Übertragung etwaiger auf den Klemmstreifen einwirkender Befestigungs- oder Beanspruchungskräfte, die aus der Konstruktion herrühren. Besonders vorteilhaft sind Innenstege mit ihrer breiten Basis dann, wenn diese die Rohrwand im Bereich zwischen zwei Außenstegen versteift.

Die Erfindung wird anhand von in der Zeichnung dargestellten Ausführungsbeispielen erläutert. Es zeigt:
- Fig.1: eine Stirnansicht eines ersten Profilstabs, an den ein zweiter, geschnitten dargestellter Profilstab mit einem ebenfalls geschnitten dargestellten Verbinder angekoppelt ist,
- Fig.2: eine vergrößerte Darstellung des ersten Profilstabs der Fig.1,
- Fig.3a: eine der Fig.1 ähnliche Darstellung mit zwei anzukoppelnden Profilstäben, und
- Fig.3b: eine Darstellung der Rückansicht des Verbinders in Richtung A der Fig.3a.

Die Figuren zeigen Querschnitte bzw. Stirnansichten von Hohlprofilstäben 10, an die Hohlprofilstäbe 31 gleicher oder abweichender Ausbildung angekoppelt werden sollen. Hierzu dienen Verbinder 42, deren Ausgestaltung beliebig sein kann.

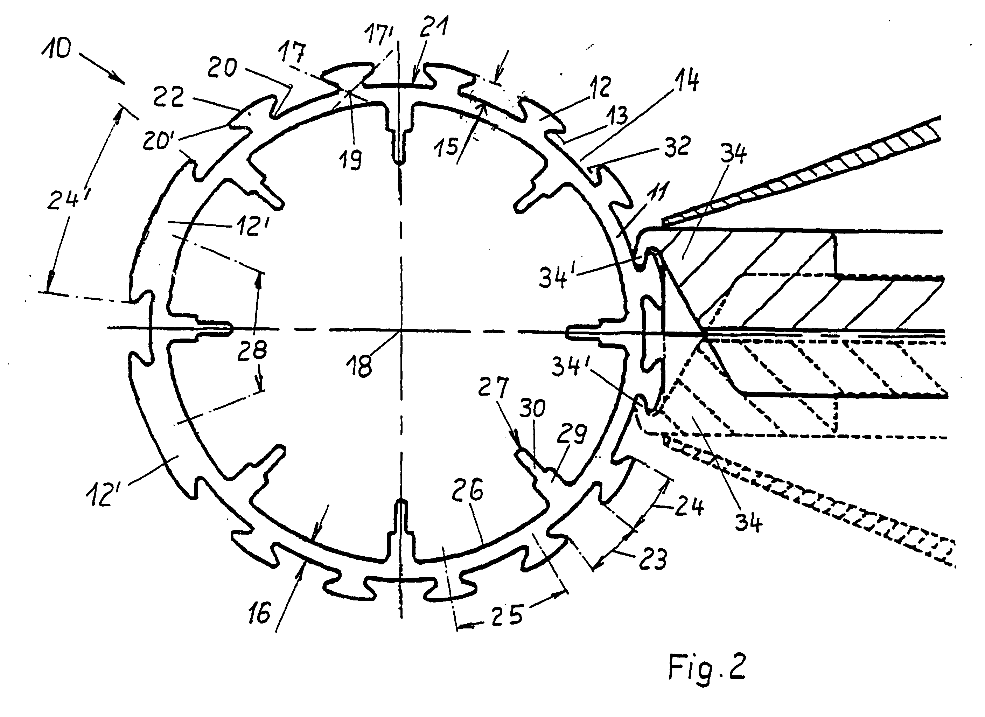

Der erste Hohlprofilstab 10 ist im wesentlichen kreiszylindrisch ausgebildet. Er ist also ein Rohr mit einer Rohrwand 11, deren Dicke 16 auf die voraussichtlich auf ihn einwirkenden Belastungskräfte abgestimmt ist. Eine Versteifung erfährt der Hohlprofilstab 10 durch über den Außenumfang gleichmäßig verteilte Außenstege 12, die radial vorstehen und zwischen sich Mantelnuten 14 ausbilden. Der Vorstand 15 der Außenstege 12 von der Rohrwand 11 ist praktisch gleich der Dicke 16 der Rohrwand 11. Die Sichtfläche 22 der Außenstege 12 ist in Bezug auf die Rohrwand 11 konvex gewölbt, könnte aber auch mehr oder weniger gewölbt sein, beispielsweise parallel zur Rohrwand 11 verlaufen. Außenstege 12 sind gleichmäßig über den Außenumfang des Profilstabs 10 verteilt, nämlich mit einer Teilung 25. Zwei Außenstege 12 schließen zwischen sich eine Mantelnut 14 ein, die schwalbenschwanzförmig ausgebildet ist. Die spezielle Ausbildung hängt von der Gestaltung der Seitenwände 13 und Außenstege 12 ab. Die Seitenwände 13 haben einen überwiegend geradlinigen Verlauf, so daß ihnen jeweils eine Neigungslinie 17, 17' zugeordnet werden kann. Die Seitenwände 13 haben die in Fig.2 dargestellten Neigungslinien 17,17', die sich schneiden. Der Schnittpunkt 19 ist in Fig.2 im Bereich der Rohrwand 11 dargestellt. Bei geringerer Neigung der Seitenwände 13 könnte er auch im Inneren der Rohrwand 11 liegen, nämlich zwischen deren Innenwand 26 und einer Stabachse 18. In jedem Fall wird durch die Seitenwände 13 jeweils eine Hinterschneidung 32 gebildet, so daß die Breite des Außenstegs 12 auf Höhe des Außenumfangs 21 der Rohrwand 11 kleiner ist, als die Außenumfangslänge 24 eines Außenstegs. Das gilt auch für Außenstege 12', deren Außenlänge 24' erheblich größer ist, weil die Außenstege 12' mit einer Teilung 28 angeordnet sind, die doppelt so groß ist, wie die Teilung 25 der Außenstege 12. Außenstege 12' können über den gesamten Umfang der Rohrwand mit der Teilung 28 angeordnet sein, ohne daß sich dadurch eine Änderung der Kopplungsmöglichkeiten ergibt, weil der Verbinder 42 stets gleichweit greift, also entweder über zwei Außenstege 12 oder einen Außensteg 12'. Die Außenstege 12' erhöhen den Werkstoffaufwand für den Hohlprofilstab 10, was für übliche geringere Beanspruchungen nicht nötig ist.

Infolgedessen ist die Außenumfangslänge 24' eines Außenstegs 12' praktisch das Dreifache des geringsten Abstands 23 zweier Außenstege 12. Generell gilt für Außenstege 12, daß deren geringster Abstand 23 praktisch ebenso groß ist, wie die Außenumfangslänge 24 der Außenstege 12. Hierdurch ergibt sich eine hinreichend geräumige Mantelnut 14 für den Eingriff von Zangenschenkeln 34 der Verbinder 42.

Des weiteren ist darauf hinzuweisen, daß die Seitenwände 13 eines Außenstegs 12 mit einem vorbestimmten Radius 20 in den Außenumfang 21 der Rohrwand 11 übergehen. Hierdurch werden Kerbspannungen im Übergangsbereich vermieden, die durch an den Außenstegen 12 auftretenden Belastungen entstehen können. Der Radius führt zu einer entsprechenden Verkürzung der geradlinigen Erstreckung einer Seitenwand 13, was sich insbesondere bei flachen Außenstegen bemerkbar macht.

Des weiteren sind Radien 20' am Übergang der Seitenwände 13 in eine praktisch außenwandparallele oder dazu konvex gewölbte Sichtfläche 22 vorhanden. Insbesondere Fig.2 läßt erkennen, daß die genannten Radien den Eingriff der Zangenschenkel 34 mit Zangenenden 34' erleichtern, insbesondere wenn es Schrägstellungen auszugleichen gilt, die entweder durch Schrägstellungen des Verbinders 42 oder durch Toleranzen des Verbinders 42 bzw. dessen Beanspruchungen verursacht werden.

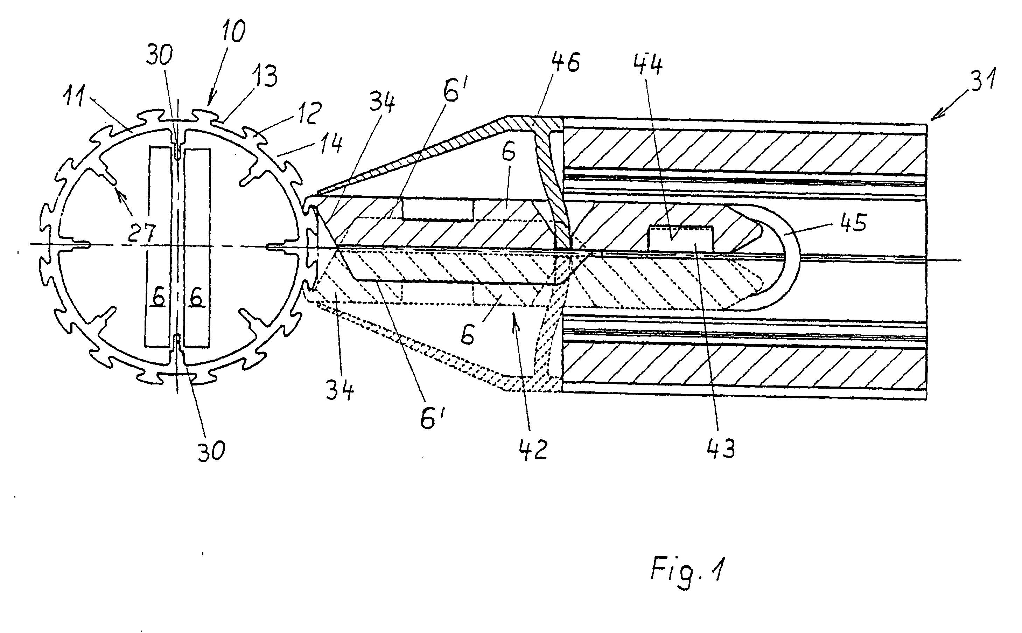

Die Innenwand 26 der Rohrwand 11 ist mit Innenstegen 27 besetzt, die gleichmäßig über den Innenumfang der Rohrwand 11 verteilt sind. Die Innenstege haben eine breite Basis 29, die einerseits direkt an der Innenwand 26 ansetzt und radial vorsteht, also in Richtung auf die Stabachse 18 gerichtet ist. Andernends ist die breite Basis jeweils mit einem Klemmstreifen 30 versehen, an dem Klemmbacken 6 des Verbinders 42 angreifen können. Es ist nicht zwangsweise erforderlich, jeden Klemmstreifen 30 mit einer breiten Basis 29 auszurüsten. Das hängt vielmehr von der Breite der eingesetzten Klemmbacken 6 des Verbinders 42 ab. Falls ein Hohlprofilstab 10 beispielsweise quadratisch ist, genügen die schmaleren Klemmstreifen 30, da sich die Klemmbacken 6 des Verbinders 42 praktisch von Wand zu Wand erstrecken können. Demgegenüber zeigt der Einbau zweier Klemmbacken 6 in den Hohlprofilstab 10 gemäß Fig.1, daß die Klemmbacken 6 infolge der Krümmung des kreiszylindrischen Hohlprofilstabs 10 kürzere Klemmstreifen nicht sicher genug erfassen können bzw. wegen ihres Abstands von der Innenwand 26 instabil erscheinen, so daß die breite Basis zweckmäßig ist.

Die Verteilung der Innenstege 27 über den Umfang ist von der zu lösenden technischen Aufgabe abhängig. Gemäß Fig.1,2 sind die Innenstege 27 vergleichsweise lang ausgebildet und daher lediglich mit einer Teilung von 45 Winkelgrad ausgebildet. Es können dann noch vergleichsweise massive und hohe Verbinder 42 eingebaut werden, ohne an den Innenstegen anzustoßen. Ihre Anordnung ist so, daß sie mit den Mantelnuten 14 fluchten. Sie versteifen die Rohrwand 11 infolgedessen in der Mitte zwischen zwei Außenstegen 12. Das ist von Bedeutung, wenn der Verbinder 42 mit seinen Zangenschenkeln 34 zwei Innenstege 12 übergreift. Hier könnte es bei einer dünnen Ausbildung der Rohrwand 11 dazu kommen, daß diese eingedrückt wird. Die breite Basis 29 verhindert dies sicher. Dabei haben die Innenstege 27 eine doppelt so große Teilung 28 in Bezug auf die Außenstege 12, jedoch eine ebenso große bzw. gleiche Teilung in Bezug auf die Außenstege 12'.

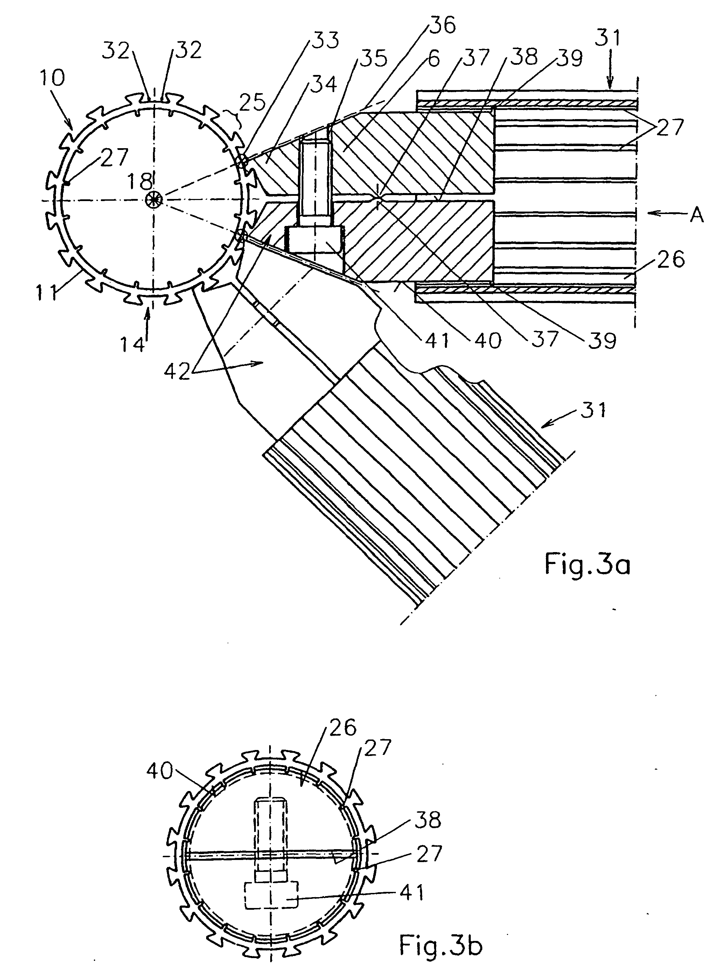

Fig.3a zeigt Innenstege 27', die ebenfalls einer Versteifung der Rohrwand 11 dienen können. In erster Linie sind sie jedoch für einen Verbinder ausgestaltet, der eine andere Wirkungsweise hat, als der der Fig.1,2.

Den Verbindern 42 aller Figuren ist gemeinsam, daß sie im wesentlichen zwei Klemmbacken 6 aufweisen, die mit einem lediglich in Fig.3a dargestellten Fixierelement 41 zusammengepreßt werden. Infolgedessen findet eine Verklemmung des Verbinders 42 mit den Zangenschenkeln 34 am Hohlprofilstab 10 statt. Außerdem findet aber auch eine Verklemmung der Klemmbacken 6 am zweiten Profilstab 31 statt.

Der Verbinder 42 der Fig.1,2 besteht aus zwei plattenförmigen Klemmbacken 6, vergl. auch deren schematischen Einbau gemäß Fig.1, die im wesentlichen massiv ausgebildet sind. Sie klemmen Klemmstreifen 30 der Innenstege 27 an ihren Kanten zwischen sich ein, wo sie geeignete linienförmige und/oder flächenförmige Klemmflächen besitzen. Die Dimensionierung der Klemmplatten ist so, daß ein Durchbiegen der Klemmbacken 6 im Bereich des Fixierelements 41 nicht möglich ist. Hiergegen wirken schematisch angedeutete Rippen 6', die an jeder Klemmbacke 6 vorhanden sind und in nicht näher dargestellte Längsnuten der jeweils anderen Klemmbacke 6 eingreifen. Eine Fixierung mit dem Fixierelement 41 sorgt also dafür, daß die gewünschte linienförmige bzw. flächenförmige Klemmung der Klemmstreifen 30 erreicht wird. Zur Positionierung der Klemmbacken 6 in ihrer Längsrichtung dient ein Positioniervorsprung 43, der hier an der unteren Klemmbacke 6 dargestellt ist, und der in eine Ausnehmung 44 der oberen Klemmbacke eingreift. Eine Klammer 45 dient dem Zusammenhalt der beiden Klemmbacken 6 vor der Montage mit dem Profilstab 31 insbesondere bei der Montage des Verbinders 42 am Hohlprofilstab 10.

Der Hohlprofilstab 31 hat einen Abstand von dem Hohlprofilstab 10, so daß ein Fixierelement 41 frei zugänglich ist und problemlos betätigt werden kann, solange eine Abdeckkappe 46 noch nicht montiert ist.

Fig.3a zeigt zwei nebeneinander in derselben Höhe des ersten Profilstabs 10 angebrachte Verbinder 42. Ein Verbinder 42 weist an einer Klemmbacke 6 eine Anformung 37 an einer Innenfläche 22 auf. Diese Anformung 37 stützt sich an einer Anformung 37 der anderen Klemmbacke 6 ab. Beide Klemmbacken 6 können miteinander verspannt werden. Hierzu dient ein Fixierelement 41, das als Schraube ausgebildet ist und in ein Gewinde 35 eingreift. Dieses ist in der oberen Klemmbacke 6 vorhanden, während die untere Klemmbacke der Aufnahme eines Schraubenkopfs in einer Senkbohrung dient. Wenn das Fixierelement 41 angezogen wird, werden die Zangenschenkel 34 der Klemmbacken 6 zusammengedrückt und greifen so in die Hinterschneidungen 32 der Mantelnuten 14 des ersten Profilstabs 10 ein. Es erfolgt eine Verklemmung an zwei Außenstegen 12. Durch die Anformungen 37 wird die Kraft des Fixierelements 41 umgelenkt und drückt die Klemmbacken 6 an einem Einsteckende der Verbinder 42 radial auseinander. Hierdurch ergibt sich ein Kraftschluß des Außenumfangs 40 der Klemmbacken 6 mit der Innenwand 26 bzw. mit Innenstegen 27 des zweiten Profilstabs 31. Die Klemmbacken 6 sind in diesem Fall an ihrem Einsteckende nicht flach ausgebildet, wie in Fig.1 dargestellt wurde, sondern halbrund. Der Außenumfang 33 entspricht deshalb nahezu dem Innenumfang der Rohrwand 11 bzw. dem Abstand zwischen den Innenstegen 27 des ersten Stabs 31. Darüber hinaus sind die Klemmbacken mit Schneidkanten 39 versehen, die sich beim Anziehen des Fixierelements 41 in die Innenstege 27 einpressen, um so das Herausziehen des Verbinders 42 aus dem Stab 31 zu verhindern.

Um mehrere gleiche Verbinder 42 mit angeschlossenem Stab 31 an dem ersten Hohlprofilstab 10 anzubringen, ist es für eine möglichst dichte Packung notwendig, daß außer der dargestellten Querschnittsausbildung des Profilstabs 10 ein Zangenschenkel 34 einer Klemmbacke 6 mit seinem Schenkelende 34' maximal die Hälfte einer Mantelnut 14 einnimmt. In die andere Hälfte ist dann ein anderer Zangenschenkel 34 mit seinem Schenkelende 34' einbaubar. Das ist insbesondere dann möglich, wenn der Verbinder 42 und das Ende des zweiten Profilstabs 31 nicht über die Mittelebenen 36 zweier Klemmbacken 6 besetzter Mantelnuten 14 hinausragen. Die Mittelebenen 36 sind durch die Achse 18 und jeweils eine parallel zur Achse 18 und durch die Mitte der Mantelnut 14 verlaufende Gerade 33 gegeben. Auf diese Weise ist eine enge Packung von vor Kopf angeordneten Profilstäben 31 zu erreichen, deren Längsachse einen Winkel von ca. 45 Grad zwischen sich einschließen, so daß entsprechend spitze Konstruktionen bzw. in eine Anbauebene eine bis zu achtfache Besetzung des Außenumfangs des Profilstabs 10 ermöglicht werden.

Fig.3b zeigt einen Querschnitt durch einen Verbinder 42 nach Fig.3a. Die Außenwand 40 der Klemmbacken 6 ist halbrund, nämlich angepaßt an die Form der Innenwand 26 des zweiten Profilstabs 31. Die Außenwände 40 der Klemmbacken 6 werden bei angezogenem Fixierelement 41 mit Schneidkanten 39 in die kurzen Innenstege 27 eingepreßt. Durch die dabei gegebene geringe Auflagefläche entsteht ein hoher Anpreßdruck und damit eine gute Verklemmung.

## Patentansprüche

1. Hohlprofilstab (10), insbesondere aus extrudiertem Metall, mit einer kreiszylindrisch ausgebildeten Rohrwand (11), die gleichmäßig über den Außenumfang verteilte, radial vorstehende Außenstege (12) aufweist, die paarweise zwischen sich schwalbenschwanzförmige Mantelnuten (14) einschließen, deren Seitenwänden (13) einen überwiegend geradlinigen Verlauf aufweisen, wodurch diesen jeweils eine Neigungslinie (17,17') zugeordnet werden kann, wobei ein überstehender Teil bzw. ein Vorstand (15) der Außenstege (12) von der Rohrwand (11) praktisch gleich deren Dicke (16) ist und sich die Neigungslinien (17,17') der Seitenwände (13) eines Außenstegs (12) zwischen diesem und der Stabachse (18) schneiden, **dadurch gekennzeichnet, daß** die Seitenwände (13) eines Außenstegs (12) mit vorbestimmten Radien (20,20') in den Außenumfang (21) der Rohrwand (11) und/oder in eine praktisch außenwandparallele oder dazu konvex gewölbte Sichtfläche (22) des Außenstegs (12) übergehen und an der Innenwand (26) der ringsum gleichdicken Rohrwand (11) mehr als zwei gleichmäßig über den Innenumfang verteilte radial vorspringende Innenstege (27) ausgebildet sind und daß die Innenstege (27) mit den hinterschnittenen Mantelnuten (14) fluchten.

2. Hohlprofilstab (10) nach Anspruch 1, **dadurch gekennzeichnet, daß** die Neigungslinien (17) der Seitenwände (13) eines Außenstegs (12) einen in der Rohrwand (11) liegenden Schnittpunkt (19) haben.

3. Hohlprofilstab (10) nach Anspruch 1 oder 2, **dadurch gekennzeichnet, daß** der geringste Abstand (23) zweier Außenstege (12) praktisch gleichgroß oder größer ist, als dessen Außenumfangslänge (24).

4. Hohlprofilstab (10) nach Anspruch 1 oder 2, **dadurch gekennzeichnet, daß** die Außenumfangslänge (24') eines Außenstegs (12') praktisch das Dreifache des geringsten Abstands (23) zweier Außenstege (12) ist.

5. Hohlprofilstab (10) nach einem oder mehreren der Ansprüche 1 bis 4, **dadurch gekennzeichnet, daß** die Teilung (25) von Außenstegen (12) an Rohrwänden (11) kreiszylindrischen Querschnitts 22,5 oder 45 Winkelgrad beträgt.

6. Hohlprofilstab (10) nach einem oder mehreren der Ansprüche 1 bis 5, **dadurch gekennzeichnet, daß** die Innenstege (27) eine gleiche oder eine doppelt *so große* Teilung (28) aufweisen, wie die Mantelnuten (14).

7. Hohlprofilstab (10) nach einem oder mehreren der Ansprüche 1 bis 6, **dadurch gekennzeichnet, daß** die Innenstege (27) jeweils eine breite Basis (29) und einen davon ausgehend radial erstreckten dünneren Klemmstreifen (30) aufweisen.

## Claims

1. Hollow profile bar (10), in particular made from extruded metal, having a circular-cylindrical tubular wall (11) which has radially protruding outer webs (12) which are distributed uniformly over the outer circumference and pairs of the said webs define dovetail-shaped surface grooves (14) between them, the side walls (13) of which surface grooves extend in a predominantly straight line, whereby a respective anticlinal axis (17, 17') can be allocated to these side walls, wherein a projecting part or a protuberance (15) of the outer webs (12) from the tubular wall (11) is practically the same thickness (16) as the tubular wall and the anticlinal axes (17, 17') of the side walls (13) of an outer web (12) intersect between this outer web and the bar axis (18), **characterised in that** the side walls (13) of an outer web (12) merge with predetermined radii (20, 20') into the outer circumference (21) of the tubular wall (11) and/or into a visible surface (22) of the outer web (12), which is practically parallel to the outer wall or is convexly curved with respect to this wall, and on the inner wall (26) of the tubular wall (11), which is the same thickness all around, more than two radially projecting inner webs (27), which are uniformly distributed over the inner circumference, are formed, and that the inner webs (27) are aligned with the under-cut surface grooves (14).

2. Hollow profile bar (10) as claimed in claim 1, **characterised in that** the anticlinal axes (17) of the side walls (13) of an outer web (12) have a point of intersection (19) lying within the tubular wall (11).

3. Hollow profile bar (10) as claimed in claim 1 or 2, **characterised in that** the smallest distance (23) between two outer webs (12) is practically the same size or larger than the outer circumferential length (24) thereof.

4. Hollow profile bar (10) as claimed in claim 1 or 2, **characterised in that** the outer circumferential length (24') of an outer web (12') is practically three times that of the smallest distance (23) between two outer webs (12).

5. Hollow profile bar (10) as claimed in any one or several of claims 1 to 4, **characterised in that** the spacing (25) between outer webs (12) on tubular walls (11) with a circular-cylindrical cross-section amounts to 22.5 or 45 angular degrees.

6. Hollow profile bar (10) as claimed in any one or several of claims 1 to 5, **characterised in that** the inner webs (27) are spaced (28) by the same amount or by double the amount of the surface grooves (14).

7. Hollow profile bar (10) as claimed in any one or several of claims 1 to 6, **characterised in that** the inner webs (27) each have a broad base (29) and a thinner clamping strip (30) extending radially therefrom.

## Revendications

1. Barre profilée creuse (10), en particulier en métal extrudé, avec une paroi tubulaire (11) de forme cylindrique ronde qui présente des nervures extérieures (12) qui sont réparties régulièrement sur la circonférence extérieure, qui font saillie radialement et qui définissent entre elles, par paires, des rainures d'enveloppe en queue d'aronde (14) dont les parois latérales (13) s'étendent principalement en ligne droite, moyennant quoi une ligne d'inclinaison (17, 17') peut être associée à chacune d'elles, une partie saillante (15) des nervures latérales (12) par rapport à la paroi tubulaire (11) correspondant pratiquement à l'épaisseur (16) desdites nervures et les lignes d'inclinaison (17, 17') des parois latérales (13) d'une nervure extérieure (12) se coupant entre celle-ci et l'axe (18) de la barre, **caractérisée en ce que** les parois latérales (13) d'une nervure extérieure (12) se prolongent avec des rayons prédéfinis (20, 20') par la circonférence extérieure (21) de la paroi tubulaire (11) et/ou par une surface visible (22) de la nervure extérieure (12) qui est pratiquement parallèle à la paroi extérieure ou convexe par rapport à celle-ci, et plus de deux nervures intérieures (27) saillant radialement et réparties régulièrement sur la circonférence intérieure sont formées sur la paroi intérieure (26) de la paroi tubulaire (11) de même épaisseur sur tout le tour, et **en ce que** les nervures intérieures (27) sont dans l'alignement des rainures contre-dépouillées (14).

2. Barre profilée creuse (10) selon la revendication 1, **caractérisée en ce que** les lignes d'inclinaison (17) des parois latérales (13) d'une nervure extérieure (12) ont une intersection (19) située dans la paroi tubulaire (11).

3. Barre profilée creuse (10) selon la revendication 1 ou 2, **caractérisée en ce que** la distance minimale (23) entre deux nervures extérieures (12) est pratiquement égale ou supérieure à la longueur circonférentielle extérieure (24) de celles-ci.

4. Barre profilée creuse (10) selon la revendication 1 ou 2, **caractérisée en ce que** la longueur circonférentielle extérieure (24') d'une nervure extérieure (12') est pratiquement trois fois supérieure à la distance minimale (23) entre deux nervures extérieures (12).

5. Barre profilée creuse (10) selon l'une au moins des revendications 1 à 4, **caractérisée en ce que** le pas (25) des nervures extérieures (12) prévues sur les parois tubulaires (11) à section transversale cylindrique est de 22,5 ou 45 degrés.

6. Barre profilée creuse (10) selon l'une au moins des revendications 1 à 5, **caractérisée en ce que** les nervures intérieures (27) ont un pas (28) égal ou deux fois supérieur à celui des rainures d'enveloppe (14).

7. Barre profilée creuse (10) selon l'une au moins des revendications 1 à 6, **caractérisée en ce que** les nervures intérieures (27) ont chacune une base large (29) et une bande de serrage plus mince (30) qui s'étend radialement à partir de celle-ci.
